# EUROPEAN PATENT APPLICATION

(11) **EP 3 979 607 A1**
(43) Date of publication of application: **06.04.2022**
(21) Application number: 20833102.5
(22) Date of filing: 10.06.2020
(51) Int. Cl.: H04M 1/02

(54) **DATA TRANSMISSION DEVICE OF MOBILE TERMINAL, AND MOBILE TERMINAL**

(30) Priority: 28.06.2019 CN 201910578418
(71) Applicant: GUANGDONG OPPO MOBILE TELECOMMUNICATIONS CORP., LTD., Wusha, Chang'an Dongguan Guangdong 523860 (CN)
(72) Inventor: ZHANG, Ye, Dongguan, Guangdong 523860 (CN)
(74) Representative: Manitz Finsterwald Patent- und Rechtsanwaltspartnerschaft mbB
(86) International application number: PCT/CN2020/095392
(87) International publication number: WO 2020/259288

(57) **Abstract**

A data transmission device (10) and a mobile terminal (100). The data transmission device (10) comprises a radio frequency front-end module (11), a Li-Fi front-end module (12), a first transceiver (13), and a first baseband protocol processor (14). The first baseband protocol processor (14) generates, according to information to be transmitted, wireless fidelity Wi-Fi transmission information or Li-Fi transmission information, and then controls the first transceiver (13) to mix the Wi-Fi transmission information to a first frequency and transmits the same by means of the radio frequency front-end module (11), or controls the first transceiver (13) to mix the Li-Fi transmission information to a second frequency and transmits the same by means of the Li-Fi front-end module (12).

## Description

### PRIORITY INFORMATION

The disclosure claims the priority to and benefits of Chinese Patent Application No. 201910578418.3 filed to China National Intellectual Property Administration on June 28, 2019, the entire content of which is incorporated herein by reference.

### TECHNICAL FIELD

The disclosure relates to a field of electronic technologies, and particularly to a data transmission apparatus for a mobile terminal and a mobile terminal.

### BACKGROUND

Visible light wireless communication, also referred to as light fidelity (LiFi), is a new wireless transmission technology for data transmission by using a visible light spectrum (such as light emitted by a bulb), characterized by rapidness, convenience, safety, environmental protection, etc., with a wide application prospect.

In the related art, communication between mobile terminals and communication between a mobile terminal and another device with a LiFi communication function may be achieved by the LiFi technology.

### SUMMARY

A data transmission apparatus for a mobile terminal and a mobile terminal provided in the disclosure are configured to solve a problem in the related art that a transmission distance and a transmission rate of LiFi communication are limited and a manufacture cost of the mobile terminal is increased since the LiFi is directional and has a limited transmission distance, and additional transceivers and special lamps need to be added in the mobile terminal.

The data transmission apparatus for a mobile terminal provided in an aspect of embodiments of the disclosure includes a radio frequency (RF) front end module; a light fidelity (LiFi) front end module; a first transceiver coupled to the RF front end module and the LiFi front end module respectively; and a first baseband protocol processor coupled to the first transceiver. The first baseband protocol processor is configured to generate wireless fidelity (WiFi) transmission information or LiFi transmission information based on information to be transmitted, and to control the first transceiver to mix the WiFi transmission information to a first frequency and transmit the WiFi transmission information mixed to the first frequency via the RF front end module, and to control the first transceiver to mix the LiFi transmission information to a second frequency and transmit the LiFi transmission information mixed to the second frequency via the LiFi front end module.

The mobile terminal provided in another aspect of embodiments of the disclosure includes the above-mentioned data transmission apparatus. The apparatus includes a radio frequency (RF) front end module; a light fidelity (LiFi) front end module; a first transceiver coupled to the RF front end module and the LiFi front end module respectively; and a first baseband protocol processor coupled to the first transceiver. The first baseband protocol processor is configured to generate wireless fidelity (WiFi) transmission information or LiFi transmission information based on information to be transmitted, and to control the first transceiver to mix the WiFi transmission information to a first frequency and transmit the WiFi transmission information mixed to the first frequency via the RF front end module, and to control the first transceiver to mix the LiFi transmission information to a second frequency and transmit the LiFi transmission information mixed to the second frequency via the LiFi front end module.

The data transmission apparatus for a mobile terminal and the mobile terminal provided in the embodiments of the disclosure include a radio frequency (RF) front end module, a light fidelity (LiFi) front end module, a first transceiver and a first baseband protocol processor. The first baseband protocol processor coupled to the first transceiver is configured to generate wireless fidelity (WiFi) transmission information or LiFi transmission information based on information to be transmitted, and to control the first transceiver to mix the WiFi transmission information to a first frequency and transmit the WiFi transmission information mixed to the first frequency via the RF front end module, and to control the first transceiver to mix the LiFi transmission information to a second frequency and transmit the LiFi transmission information mixed to the second frequency via the LiFi front end module. Therefore, the LiFi communication function of a mobile terminal may be achieved by multiplexing a transceiver and a baseband protocol processor through a LiFi front end module and an RF front end module without adding an additional transceiver and a special lamp, which not only improves the transmission distance and transmission quality of LiFi communication, but also saves the manufacture cost of the mobile terminal.

Additional aspects and advantages of the present disclosure will be set forth in part in the following description, and in part will become obvious from the following description, or may be learned by practice of the disclosure.

### BRIEF DESCRIPTION OF THE DRAWINGS

The above and/or additional aspects and advantages of the present disclosure may be obvious and easily understood in descriptions of embodiments in combination with figures:
FIG. 1 is a block diagram of a data transmission apparatus for a mobile terminal according to an embodiment of the disclosure;
FIG. 2 is a block diagram of another data transmission apparatus for a mobile terminal according to an embodiment of the disclosure;
FIG. 3 is a block diagram of a radio frequency (RF) front end module of a data transmission apparatus for a mobile terminal according to an embodiment of the disclosure;
FIG. 4 is a block diagram of a LiFi front end module of a data transmission apparatus for a mobile terminal according to an embodiment of the disclosure;
FIG. 5 is a block diagram of another data transmission apparatus for a mobile terminal according to an embodiment of the disclosure.

### DETAILED DESCRIPTION

Embodiments of the present disclosure are described in detail below, and examples of embodiments are illustrated in the accompanying drawings, the same or similar labels represent the same or similar elements. The embodiments described below with reference to the drawings are exemplary, are intended to explain the present disclosure and are not to be construed as a limitation of the present disclosure.

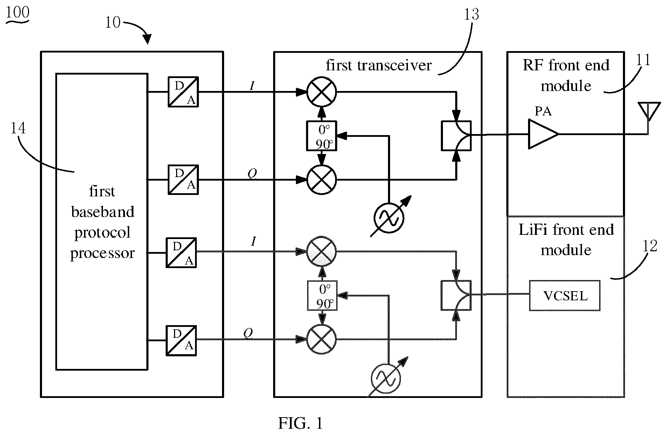

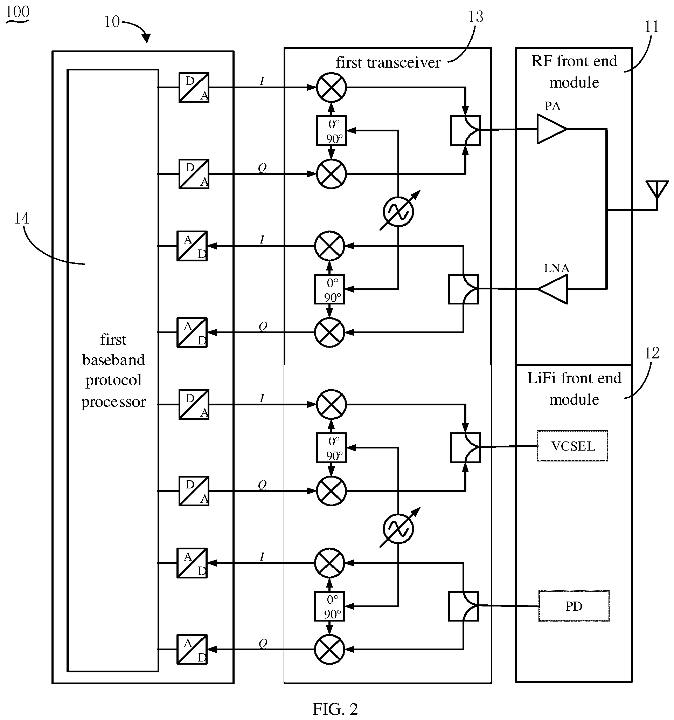

As illustrated in FIG. 1 and FIG. 2, a data transmission apparatus 10 for a mobile terminal 100 according to an embodiment includes a radio frequency (RF) front end module 11, a light fidelity (LiFi) front end module 12, a first transceiver 13 coupled to the RF front end module 11 and the LiFi front end module 12 respectively and a first baseband protocol processor 14 coupled to the first transceiver 13. The first baseband protocol processor 14 is configured to generate wireless fidelity (WiFi) transmission information or LiFi transmission information based on information to be transmitted, to control the first transceiver 13 to mix the WiFi transmission information to a first frequency and transmit the WiFi transmission information mixed to the first frequency via the RF front end module 11, and to control the first transceiver 13 to mix the LiFi transmission information to a second frequency and transmit the LiFi transmission information mixed to the second frequency via the LiFi front end module 12.

As illustrated in FIG. 1 and FIG. 2, in some embodiments, the first transceiver 13 is further configured to acquire WiFi reception information at the first frequency received by the RF front end module 11, to down-convert the WiFi reception information at the first frequency to a baseband frequency, to transmit the WiFi reception information down-converted to the baseband frequency to the first baseband protocol processor 14, and to acquire LiFi reception information at the second frequency received by the LiFi front end module 12, to down-convert the LiFi reception information at the second frequency to a baseband frequency, to transmit the LiFi reception information down-converted to the baseband frequency to the first baseband protocol processor 14.

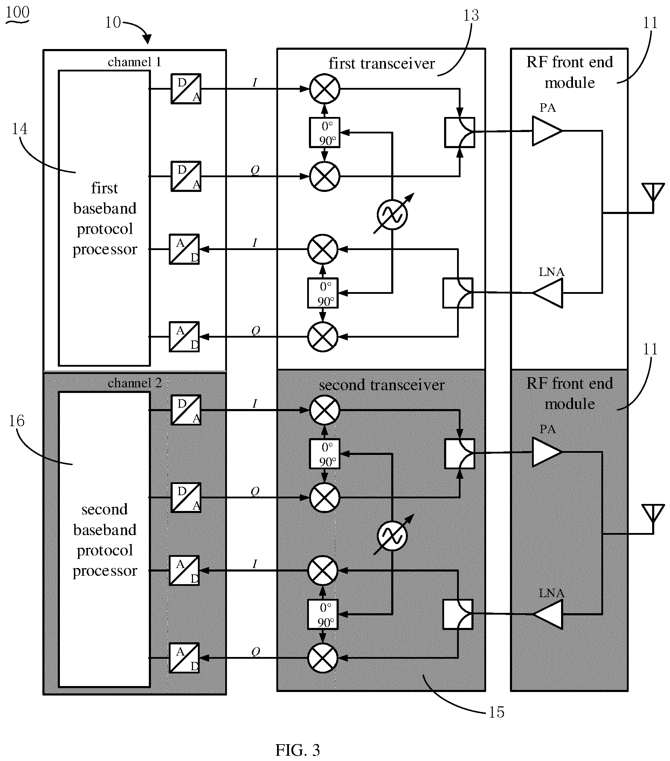

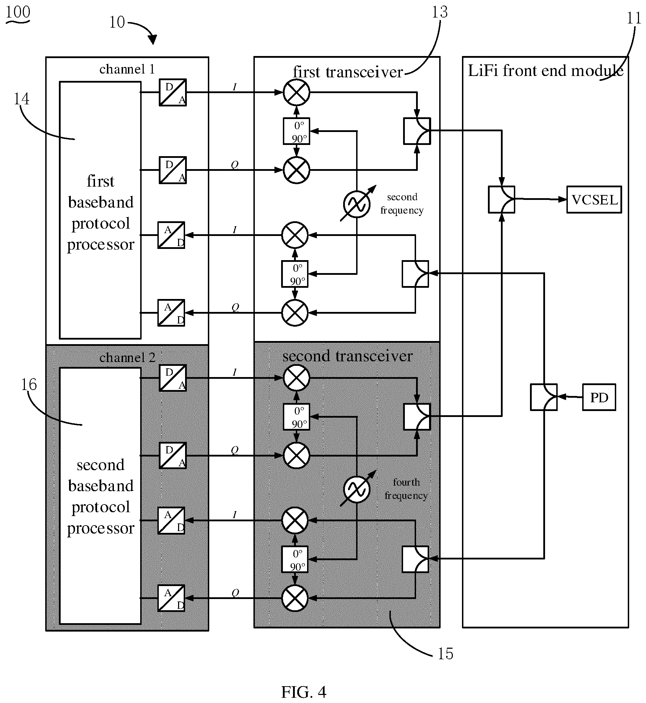

As illustrated in FIG. 3 and FIG. 4, in some embodiments, the apparatus 10 further includes a second transceiver 15 coupled to the RF front end module 11 and the LiFi front end module 12 respectively and a second baseband protocol processor 16 coupled to the second transceiver 15. The second baseband protocol processor 16 is configured to generate the WiFi transmission information or the LiFi transmission information based on the information to be transmitted, to control the second transceiver 15 to mix the WiFi transmission information to a third frequency and transmit the WiFi transmission information mixed to the third frequency via the RF front end module 11, and to control the second transceiver 15 to mix the LiFi transmission information to a fourth frequency and transmit the LiFi transmission information mixed to the fourth frequency via the LiFi front end module 12.

As illustrated in FIG. 3 and FIG. 4, in some embodiments, the second transceiver 15 is further configured to acquire WiFi reception information at the third frequency received by the RF front end module 11, to down-convert the WiFi reception information at the third frequency to a baseband frequency, to transmit the WiFi reception information down-converted to the baseband frequency to the second baseband protocol processor 16, and to acquire LiFi reception information at the fourth frequency received by the LiFi front end module 12, to down-convert the LiFi reception information at the fourth frequency to the baseband frequency, and to transmit the LiFi reception information down-converted to the baseband frequency to the second baseband protocol processor 16.

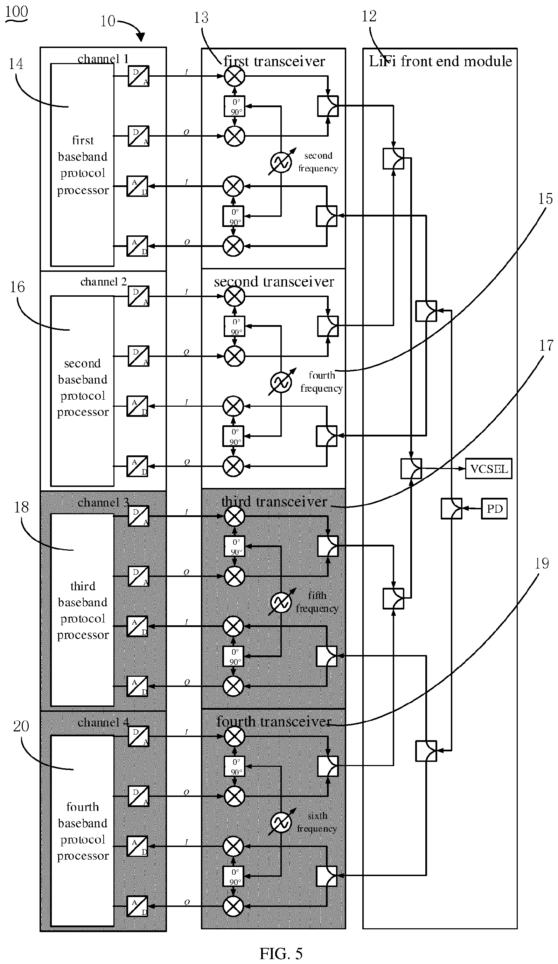

As illustrated in FIG. 5, in some embodiments, the apparatus 10 further includes a third transceiver 17 coupled to the LiFi front end module 12 and a third baseband protocol processor 18 coupled to the third transceiver 17. The third baseband protocol processor 18 is configured to generate the LiFi transmission information based on the information to be transmitted, and to control the third transceiver 17 to mix the LiFi transmission information to a fifth frequency and transmit the LiFi transmission information mixed to the fifth frequency via the LiFi front end module 12.

As illustrated in FIG. 5, in some embodiments, the third transceiver 17 is further configured to acquire LiFi reception information at the fifth frequency received by the LiFi front end module 12, to down-convert the LiFi reception information at the fifth frequency to a baseband frequency, and to transmit the LiFi reception information down-converted to the baseband frequency to the third baseband protocol processor 18.

As illustrated in FIG. 5, in some embodiments, the apparatus 10 further includes a fourth transceiver 19 coupled to the LiFi front end module 12 and a fourth baseband protocol processor 20 coupled to the fourth transceiver 19. The fourth baseband protocol processor 20 is configured to generate the LiFi transmission information based on the information to be transmitted, and to control the fourth transceiver 19 to mix the LiFi transmission information to a sixth frequency and transmit the LiFi transmission information mixed to the sixth frequency via the LiFi front end module 12.

As illustrated in FIG. 5, in some embodiments, the fourth transceiver 19 is further configured to acquire LiFi reception information at the sixth frequency received by the LiFi front end module 12, to down-convert the LiFi reception information at the sixth frequency to a baseband frequency, and to transmit the LiFi reception information down-converted to the baseband frequency to the fourth baseband protocol processor 20.

In some embodiments, the second frequency, the fourth frequency, the fifth frequency, and the sixth frequency are 80 MHz, 160 MHz, 280 MHz, and 360 MHz, respectively.

In some embodiments, the first frequency and the third frequency are 2.4GHz and 5GHz, respectively.

As illustrated in FIGS. 1 to 5, a mobile terminal 100 according to an embodiment of the disclosure includes the data transmission apparatus 10 described in the any above embodiment.

As illustrated in FIG. 1, the embodiment of the disclosure provides the data transmission apparatus 10 for the mobile terminal 100 to solve the problem in the related art that the transmission distance and the transmission rate of LiFi communication are limited and the manufacture cost of the mobile terminal is increased since the LiFi is directional and has a limited transmission distance, and additional transceivers and special lamps need to be added in the mobile terminal 100.

The data transmission apparatus 10 for the mobile terminal 100 according to the embodiment of the disclosure includes a radio frequency (RF) front end module 11, a light fidelity (LiFi) front end module 12, a first transceiver 13 and a first baseband protocol processor 14. The first baseband protocol processor 14 coupled to the first transceiver 13 is configured to generate wireless fidelity (WiFi) transmission information or LiFi transmission information based on information to be transmitted, to control the first transceiver 13 to mix the WiFi transmission information to a first frequency for transmission via the radio frequency front end module 11, and to control the first transceiver 13 to mix the LiFi transmission information to a second frequency for transmission via the LiFi front end module 12. Therefore, the LiFi communication function of the mobile terminal 100 may be achieved by multiplexing a transceiver and a baseband protocol processor through the LiFi front end module 12 and the RF front end module 11 without adding an additional transceiver and a special lamp, which not only improves the transmission distance and transmission quality of LiFi communication, but also saves the manufacture cost of the mobile terminal 100.

The data transmission apparatus 10 for the mobile terminal 100 and the mobile terminal 100 provided in the embodiments of the disclosure are described below with reference to drawings.

FIG. 1 is a block diagram of a data transmission apparatus 10 for a mobile terminal 100 provided in an embodiment of the disclosure.

As illustrated in FIG. 1, the apparatus 10 includes a radio frequency (RF) front end module 11, a light fidelity (LiFi) front end module 12, a first transceiver 13 and a first baseband protocol processor 14.

The first transceiver 13 is coupled to the RF front end module 11 and the LiFi front end module 12, respectively. The first baseband protocol processor 14 is coupled to the first transceiver 13. The first baseband protocol processor 14 is configured to generate wireless fidelity (WiFi) transmission information or LiFi transmission information based on information to be transmitted, and to control the first transceiver 13 to mix the WiFi transmission information to a first frequency and transmit the WiFi transmission information mixed to the first frequency via the radio frequency front end module 11, and to control the first transceiver 13 to mix the LiFi transmission information to a second frequency and transmit the LiFi transmission information mixed to the second frequency via the LiFi front end module 12.

In the embodiment of the disclosure, the mobile terminal 100 may be a hardware device with various operating systems, a touch screen and/or a display screen, such as a mobile phone, a tablet computer, a personal digital assistant, a wearable device.

It should be noted that a light fidelity (LiFi) technology is a light-based internet access technology for data transmission by taking light emitted by an LED lamp as a transmission tool of a network signal to achieve light-based internet access. LiFi is characterized by low radiation, low power consumption, low carbon and environmental friendly, which has become a research hot spot in the Internet field.

The bottom layer of a LiFi protocol is compatible with a WiFi 802.11 baseband, one-to-many or many-to-one simultaneous transmission may be achieved by using a TDD protocol of WiFi when transmitting data, and there is an extremely high security when transmitting data through the LiFi technology, since visible light may only propagate along a straight line and only people on the light propagation straight line may intercept information. And due to the low latency of LiFi, it may be applied to scenes that require rapid data transmission, for example, rapidly sharing files, exchanging business card contacts, watching videos together.

In the embodiment of the disclosure, the RF front end module (FEM) 11 is configured to achieve the WiFi communication function of the mobile terminal 100, and the LiFi front end module 12 is configured to achieve the LiFi communication function of the mobile terminal 100. The mobile terminal 100 with the WiFi communication function generally includes the RF front end module 11, a transceiver and a baseband protocol processor, and in the embodiment, the RF front end module 11 and the LiFi front end module 12 share the first transceiver 13 and the first baseband protocol processor 14, thereby achieving sharing of a baseband and a transceiver by LiFi and WiFi.

The apparatus 10 for the mobile terminal 100 in the embodiment of the disclosure may automatically recognize a current communication mode of the mobile terminal 100 based on system information of the mobile terminal 100. When the current communication mode of the mobile terminal 100 is a WiFi communication mode, the first baseband protocol processor 14 may generate WiFi transmission information based on acquired information to be transmitted by digital-to-analog conversion, control the first transceiver 13 to mix the WiFi transmission information to a first frequency through a local oscillator (LO) signal at the first frequency, amplify the mixed WiFi signal power by a power amplifier (PA) in the RF front end module 11, and transmit the mixed and amplified WiFi signal out via a transmitting antenna.

It should be noted that the RF front end module 11 may include a PA to amplify the power of the WiFi signal to be large enough (such as 20 dBm) so as to meet requirements of a WiFi communication protocol.

Accordingly, when the current communication mode of the mobile terminal 100 is a LiFi communication mode, the first baseband protocol processor 14 may generate LiFi transmission information based on the acquired information to be transmitted by digital-to-analog conversion, control the first transceiver 13 to mix the LiFi transmission information to a second frequency through a LO signal at the second frequency, and transmit the LiFi transmission information out through an emitting laser in the LiFi front end module 12. The emitting laser in the LiFi front end module 12 may be a vertical cavity surface emitting laser (VCSEL), which is not limited herein.

It should be noted that the first frequency may be 2.4 GHz and the second frequency may be 80 MHz, which is not limited herein. 2.4 GHz is a public frequency band of WiFi, and 80 MHz is less than 200 MHz, which may meet time rising and falling edge requirements of VCSEL.

Further, the apparatus 10 in the embodiment of the disclosure may further acquire WiFi transmission information or LiFi transmission information transmitted by other devices. That is, in one possible implementation of the disclosure, the above first transceiver 13 may be further configured to: acquire WiFi reception information at the first frequency received by the RF front end module 11, and down-convert the WiFi reception information at the first frequency to a baseband frequency and transmit the WiFi reception information down-converted to the baseband frequency to the first baseband protocol processor 14, and acquire LiFi reception information at the second frequency received by the LiFi front end module 12, and down-convert the LiFi reception information at the second frequency to the baseband frequency and transmit the LiFi reception information down-converted to the baseband frequency to the first baseband protocol processor 14.

FIG. 2 is a block diagram of another data transmission apparatus 10 for a mobile terminal 10 provided in an embodiment of the disclosure. When the RF front end module 11 receives the WiFi reception information at the first frequency, a low noise amplifier (LNA) in the RF front end module 11 may amplify a signal power of the acquired WiFi reception information to improve the received signal quality. Further the first transceiver 13 down-converts the WiFi reception information to the baseband frequency and transmits the down-converted WiFi reception information to the first baseband protocol processor 14, thereby completing reception of the WiFi information.

Accordingly, when the LiFi front end module 12 receives LiFi reception information at the second frequency, a photo diode (PD) in the LiFi front end module 12 may receive the LiFi reception information, and further the first transceiver 13 down-converts the LiFi reception information to the baseband frequency and transmits the down-converted LiFi reception information to the first baseband protocol processor 14, thereby completing reception of the LiFi information.

The apparatus 10 in the embodiment of the disclosure includes the radio frequency (RF) front end module 11, the light fidelity (LiFi) front end module 12, the first transceiver 13 and the first baseband protocol processor 14. The first baseband protocol processor 14 coupled to the first transceiver 13 is configured to generate wireless fidelity (WiFi) transmission information or LiFi transmission information based on information to be transmitted, to control the first transceiver 13 to mix the WiFi transmission information to a first frequency for transmission via the radio frequency front end module 11, and to control the first transceiver 13 to mix the LiFi transmission information to a second frequency for transmission via the LiFi front end module 12. Therefore, the LiFi communication function of the mobile terminal 100 may be achieved by multiplexing a transceiver and a baseband protocol processor through the LiFi front end module 12 and the RF front end module 11 without adding an additional transceiver and a special lamp, which not only improves the transmission distance and transmission quality of LiFi communication, but also saves the manufacture cost of the mobile terminal 100.

In one possible implementation of the disclosure, the WiFi transmission information and the LiFi transmission information may be mixed to a plurality of frequencies over a plurality of channels by using a multiple-input multiple-output (MIMO) technology and the acquired WiFi transmission information at the plurality of frequencies are transmitted respectively while the LiFi transmission information at the plurality of frequencies are combined transmitted to improve the quality of WiFi communication or LiFi communication.

In combination with FIG. 3 and FIG. 4, the mobile terminal 100 provided in the embodiment of the disclosure is further described.

FIG. 3 is a block diagram of a RF front end module 11 of another data transmission apparatus 10 for a mobile terminal 100 provided in an embodiment of the disclosure, and FIG. 4 is a block diagram of a LiFi front end module of another data transmission apparatus 10 for a mobile terminal 100 provided in an embodiment of the disclosure.

It should be noted that, for convenience of description, transmission and reception process of WiFi information is described with reference to FIG. 3, and transmission and reception process of LiFi information is described with reference to FIG. 4, and FIG. 3 and FIG. 4 may be configured to represent an overall structure of the data transmission apparatus 10 for the mobile terminal 100 in the embodiment.

As illustrated in FIG. 3 and FIG. 4, on the basis of FIG. 1 and FIG. 2, the data transmission apparatus 10 for the mobile terminal 100 further includes a second transceiver 15 and a second baseband protocol processor 16.

The second transceiver 15 is coupled to the RF front end module 11 and the LiFi front end module 12, respectively. The second baseband protocol processor 16 is coupled to the second transceiver 15. The second baseband protocol processor 16 is configured to generate the WiFi transmission information or the LiFi transmission information based on the information to be transmitted, to control the second transceiver 15 to mix the WiFi transmission information to a third frequency and transmit the WiFi transmission information mixed to the third frequency via the RF front end module 11, and to control the second transceiver 15 to mix the LiFi transmission information to a fourth frequency and transmit the LiFi transmission information mixed to the fourth frequency via the LiFi front end module 12.

It should be noted that the third frequency may be 5 GHz, and the fourth frequency may be 160 MHz, which are not limited. 2.4 GHz and 5 GHz are public frequency bands of WiFi, and 80 MHz and 160 MHz are less than 200 MHz, which can meet the time rising and falling edge requirements of VCSEL and PD.

As one possible implementation, the WiFi transmission information and the LiFi transmission information may be mixed to a plurality of frequencies over a plurality of channels respectively through the MIMO technology to improve the transmission quality of WiFi communication and LiFi communication. After the first baseband protocol processor 14 and the first transceiver 13 in channel 1 mix the WiFi information to the first frequency, the second baseband protocol processor 16 in channel 2 may generate the WiFi transmission information based on the acquired information to be transmitted, and control the second transceiver 15 to mix the WiFi transmission information to the third frequency through the LO signal at the third frequency. The PA in the RF front end module 11 may amplify a power of the mixed WiFi signal. Further, the mixed and amplified WiFi signal at the first frequency and the third frequency in two channels are transmitted out through transmitting antennas in channel 1 and channel 2, respectively.

Accordingly, as illustrated in FIG. 4, after the first baseband protocol processor 14 and the first transceiver 13 in channel 1 mix the LiFi information to the second frequency, the second baseband protocol processor 16 in channel 2 may generate the LiFi transmission information based on the acquired information to be transmitted, and control the second transceiver 15 to mix the LiFi transmission information to the fourth frequency through the LO signal at the fourth frequency. Further the LiFi front end module 12 may combine the LiFi transmission information at the second frequency with the LiFi transmission information at the fourth frequency and transmit the combined LiFi signal containing two frequency bands out through the VCSEL.

Further, when WiFi communication and LiFi communication are achieved through the MIMO technology, the data transmission apparatus 10 for the mobile terminal 100 may further receive WiFi reception information and LiFi reception information at a plurality of frequencies. In one possible implementation of the disclosure, the second transceiver 15 may also be configured to: acquire WiFi reception information at the third frequency received by the RF front end module 11, down-convert the WiFi reception information at the third frequency to a baseband frequency, transmit the WiFi reception information down-converted to the baseband frequency to the second baseband protocol processor 16, acquire LiFi reception information at the fourth frequency received by the LiFi front end module 12, down-convert the LiFi reception information at the fourth frequency to the baseband frequency and transmit the LiFi reception information down-converted to the baseband frequency to the second baseband protocol processor 16.

In the embodiment, the RF front end module 11 may receive the WiFi reception information at the first frequency and the third frequency, and down-convert the WiFi reception information at the first frequency and the WiFi reception information at the third frequency through the first transceiver 13 and the second transceiver 15, respectively. Specifically, when the RF front end module 11 receives the WiFi reception information at the first frequency, the LNA of the RF front end module 11 in channel 1 may amplify a signal power of the acquired WiFi reception information to improve the received signal quality. Further the first transceiver 13 down-converts the WiFi reception information to the baseband frequency and transmits the down-converted WiFi reception information to the first baseband protocol processor 14. When the RF front end module 11 receives the WiFi reception information at the third frequency, the LNA of the radio frequency front end module 11 in channel 2 may amplify a signal power of the acquired WiFi reception information to improve the received signal quality. Further the second transceiver 15 down-converts the WiFi reception information to the baseband frequency and transmits the down-converted WiFi reception information to the second baseband protocol processor 16. In this way, reception of the WiFi information can be completed.

Accordingly, the LiFi front end module 12 may receive LiFi reception information combined at the second frequency and the fourth frequency. Specifically, the LiFi front-end module 12, after acquiring the LiFi reception information combined at the second frequency and the fourth frequency, may decompose the LiFi reception information combined at the second frequency and the fourth frequency into the LiFi reception information at the second frequency and the LiFi reception information at the fourth frequency by the PD. The first transceiver 13 down-converts the LiFi reception information at the second frequency to the baseband frequency and transmits the down-converted LiFi reception information to the first baseband protocol processor 14. The second transceiver 15 down-converts the LiFi reception information at the fourth frequency to the baseband frequency and transmits the down-converted LiFi reception information to the second baseband protocol processor 16. In this way, reception of the LiFi information can be completed.

Further, for the LiFi communication, the LiFi transmission information may be mixed to more frequency bands to further improve the data transmission rate of LiFi. In one possible implementation of the disclosure, as illustrated in FIG. 5, on the basis of FIG. 4, the data transmission apparatus 10 for the mobile terminal 100 may further include a third transceiver 17 and a third baseband protocol processor 18. The third transceiver 17 is coupled to the LiFi front end module 12. The third baseband protocol processor 18 is coupled to the third transceiver 17. The third baseband protocol processor 18 is configured to generate the LiFi transmission information based on the information to be transmitted and to control the third transceiver 17 to mix the LiFi transmission information to a fifth frequency and transmit the LiFi transmission information mixed to the fifth frequency via the LiFi front end module 12. The fifth frequency may be 280 MHz, which is not limited herein.

As one possible implementation, the LiFi transmission information may be mixed to a plurality of frequencies over a plurality of channels through the MIMO technology to further improve the transmission rate of LiFi communication. As illustrated in FIG. 5, after the first baseband protocol processor 14 and the first transceiver 13 in channel 1 mix the LiFi information to the second frequency, and the second baseband protocol processor and the second transceiver 15 in channel 2 mix the LiFi information to the fourth frequency, the third baseband protocol processor 18 in channel 3 may generate the LiFi transmission information based on the acquired information to be transmitted at the same time and control the third transceiver 17 to mix the LiFi transmission information to the fifth frequency through the LO signal at the fifth frequency. Further the LiFi front end module 12 may combine the LiFi transmission information at the second frequency, the LiFi transmission information at the fourth frequency and the LiFi transmission information at the fifth frequency and transmit the combined LiFi signal containing three frequency bands out through the VCSEL.

Further, when the LiFi communication is achieved through the MIMO technology, the data transmission apparatus 10 for the mobile terminal 100 may receive LiFi reception information combined at a plurality of frequencies. In a possible implementation of the disclosure, the third transceiver 17 may be further configured to: acquire LiFi reception information at the fifth frequency received by the LiFi front end module 12, down-convert the LiFi reception information at the fifth frequency to the baseband frequency, and transmit the LiFi reception information down-converted to the baseband frequency to the third baseband protocol processor 18.

In the embodiment of the disclosure, the LiFi front end module 12 may receive LiFi reception information combined at the second frequency, the fourth frequency and the fifth frequency. Specifically, the LiFi front-end module 12, after acquiring the LiFi reception information combined at the second frequency, the fourth frequency and the fifth frequency, may decompose the LiFi reception information combined at the second frequency, the fourth frequency and the fifth frequency into the LiFi reception information at the second frequency, the LiFi reception information at the fourth frequency and the LiFi reception information at the fifth frequency by the PD. The first transceiver 13 down-converts the LiFi reception information at the second frequency to the baseband frequency and transmits the down-converted LiFi reception information to the first baseband protocol processor 14, the second transceiver 15 down-converts the LiFi reception information at the fourth frequency to the baseband frequency and transmits the down-converted LiFi reception information to the second baseband protocol processor 16, and the third transceiver 17 down-converts the LiFi reception information at the fifth frequency to the baseband frequency and transmits the down-converted LiFi reception information to the third baseband protocol processor 18, such that reception of the LiFi information can be completed.

Further, the LiFi transmission information may be mixed to four frequencies over four channels for combined delivery. In one possible implementation of the disclosure, as illustrated in FIG. 5, on the basis of FIG. 4, the data transmission apparatus 10 for the mobile terminal 100 may further include a fourth transceiver 19 and a fourth baseband protocol processor 20. The fourth transceiver 19 is coupled to the LiFi front end module 12. The fourth baseband protocol processor 20 is coupled to the fourth transceiver 19. The fourth baseband protocol processor 20 is configured to generate the LiFi transmission information based on the information to be transmitted and control the fourth transceiver 19 to mix the LiFi transmission information to a sixth frequency and transmit the LiFi transmission information mixed to the sixth frequency via the LiFi front end module 12. The sixth frequency may be 360MHz, which is not limited herein.

As one possible implementation, the LiFi transmission information may be mixed to four frequencies over four channels through the MIMO technology to improve the transmission rate of LiFi communication. As illustrated in FIG. 5, after the first baseband protocol processor and the first transceiver 13 in channel 1 mix the LiFi information to the second frequency, the second baseband protocol processor and the second transceiver 15 in channel 2 mix the LiFi information to the fourth frequency, and the third baseband protocol processor and the third transceiver 17 in channel 3 mix the LiFi information to the fifth frequency, the fourth baseband protocol processor 20 in channel 4 may generate the LiFi transmission information based on the acquired information to be transmitted, and control the fourth transceiver 19 to mix the LiFi transmission information to the sixth frequency through the LO signal at the sixth frequency. Further, the LiFi front end module 12 may combine the LiFi transmission information at the second frequency, the LiFi transmission information at the fourth frequency, the LiFi transmission information at the fifth frequency and the LiFi transmission information at the sixth frequency and transmit the combined LiFi signal containing four frequency bands out through the VCSEL.

Further, when the LiFi communication is achieved through the MIMO technology, the data transmission apparatus 10 for the mobile terminal 100 may also receive LiFi reception information combined at four frequencies. In one possible implementation of the disclosure, the second transceiver 19 may be further configured to: acquire the LiFi reception information at the sixth frequency received by the LiFi front end module 12, down-convert the LiFi reception information at the sixth frequency to the baseband frequency, and transmit the LiFi reception information down-converted to the baseband frequency to the fourth baseband protocol processor 20.

In the embodiment of the disclosure, the LiFi front end module 12 may receive LiFi reception information combined at the second frequency, the fourth frequency, the fifth frequency and the sixth frequency. Specifically, the LiFi front end module 12, after acquiring the LiFi reception information combined at the second frequency, the fourth frequency, the fifth frequency and the sixth frequency, may decompose the LiFi reception information combined at the second frequency, the fourth frequency, the fifth frequency and the sixth frequency into the LiFi reception information at the second frequency, the LiFi reception information at the fourth frequency, the LiFi reception information at the fifth frequency and the LiFi reception information at the sixth frequency by the PD. Further, the first transceiver 13 down-converts the LiFi reception information at the second frequency to the baseband frequency and transmits the down-converted LiFi reception information to the first baseband protocol processor 14, the second transceiver 15 down-converts the LiFi reception information at the fourth frequency to the baseband frequency and transmits the down-converted LiFi reception information to the second baseband protocol processor 16, the third transceiver 17 down-converts the LiFi reception information at the fifth frequency to the baseband frequency and transmits the down-converted LiFi reception information to the third baseband protocol processor 18, and the fourth transceiver 19 down-converts the LiFi reception information at the sixth frequency to the baseband frequency and transmits the down-converted LiFi reception information to the fourth baseband protocol processor 20, such that reception of the LiFi information can be completed.

The data transmission apparatus 10 for the mobile terminal 100 in the embodiment of the disclosure includes the radio frequency (RF) front end module 11, the light fidelity (LiFi) front end module 12, a plurality of transceivers and a plurality of baseband protocol processors. The plurality of baseband protocol processors coupled to the plurality of transceivers generate WiFi transmission information or LiFi transmission information based on information to be transmitted, control the plurality of transceivers to mix the WiFi transmission information to a plurality of frequencies for transmission via the radio frequency front end module 11, and control the plurality of transceivers to mix the LiFi transmission information to a plurality of frequencies and for transmission via the LiFi front end module 12. Therefore, the LiFi communication function of the mobile terminal 100 may be achieved by multiplexing a plurality of transceivers and a plurality of baseband protocol processors through the LiFi front end module 12 and the RF front end module 11 without adding an additional transceiver and a special lamp, which improves the transmission distance and transmission quality of LiFi communication and saves the manufacture cost of the mobile terminal 100, further enhances the data transmission rate of LiFi communication.

In order to achieve the embodiments, the disclosure further provides a mobile terminal 100 including the data transmission apparatus 10 described above.

The mobile terminal in the embodiment of the disclosure 100 includes the data transmission apparatus 10 described above, which includes the radio frequency (RF) front end module 11, the light fidelity (LiFi) front end module 12, the first transceiver 13 and the first baseband protocol processor 14. The first baseband protocol processor 14 coupled to the first transceiver 13 is configured to generate wireless fidelity (WiFi) transmission information or LiFi transmission information based on information to be transmitted, to control the first transceiver 13 to mix the WiFi transmission information to a first frequency for transmission via the radio frequency front end module 11, and to control the first transceiver 13 to mix the LiFi transmission information to a second frequency for transmission via the LiFi front end module 12. Therefore, the LiFi communication function of the mobile terminal 100 may be achieved by multiplexing a transceiver and a baseband protocol processor through the LiFi front end module 12 and the RF front end module 11 without adding an additional transceiver and a special lamp, which not only improves the transmission distance and transmission quality of LiFi communication, but also saves the manufacture cost of the mobile terminal 100.

After considering the specification and practicing the disclosure herein, those skilled in the art will easily think of other embodiments of the present application. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The specification and embodiments are only be illustrative, and the true scope and spirit of the disclosure are indicated by the claims.

It should be understood that the present disclosure is not limited to the precise structure described above and shown in the drawings, and various modifications and changes may be made without departing from its scope. The scope of the present application is only limited by the appended claims.

## Claims

1. A data transmission apparatus for a mobile terminal, comprising:
a radio frequency (RF) front end module;
a light fidelity (LiFi) front end module; and
a first transceiver, coupled to the RF front end module and the LiFi front end module, respectively;
a first baseband protocol processor, coupled to the first transceiver, configured to generate wireless fidelity (WiFi) transmission information or LiFi transmission information based on information to be transmitted, and to control the first transceiver to mix the WiFi transmission information to a first frequency and transmit the WiFi transmission information mixed to the first frequency via the RF front end module, and to control the first transceiver to mix the LiFi transmission information to a second frequency and transmit the LiFi transmission information mixed to the second frequency via the LiFi front end module.

2. The apparatus of claim 1, wherein, the first transceiver is further configured to:
acquire WiFi reception information at the first frequency received by the RF front end module, down-convert the WiFi reception information at the first frequency to a baseband frequency and transmit the WiFi reception information down-converted to the baseband frequency to the first baseband protocol processor; and
acquire LiFi reception information at the second frequency received by the LiFi front end module, down-convert the LiFi reception information at the second frequency to the baseband frequency and transmit the LiFi reception information down-converted to the baseband frequency to the first baseband protocol processor.

3. The apparatus of claim 1 or 2, further comprising:
a second transceiver, coupled to the RF front end module and the LiFi front end module, respectively; and
a second baseband protocol processor, coupled to the second transceiver, configured to generate the WiFi transmission information or the LiFi transmission information based on the information to be transmitted, and to control the second transceiver to mix the WiFi transmission information to a third frequency and transmit the WiFi transmission information mixed to the third frequency via the RF front end module, and to control the second transceiver to mix the LiFi transmission information to a fourth frequency and transmit the LiFi transmission information mixed to the fourth frequency via the LiFi front end module.

4. The apparatus of claim 3, wherein, the second transceiver is further configured to:
acquire WiFi reception information at the third frequency received by the RF front end module, down-convert the WiFi reception information at the third frequency to a baseband frequency and transmit the WiFi reception information down-converted to the baseband frequency to the second baseband protocol processor; and
acquire LiFi reception information at the fourth frequency received by the LiFi front end module, down-convert the LiFi reception information at the fourth frequency to the baseband frequency and transmit the LiFi reception information down-converted to the baseband frequency to the second baseband protocol processor.

5. The apparatus of claim 3, further comprising:
a third transceiver, coupled to the LiFi front end module; and
a third baseband protocol processor, coupled to the third transceiver, configured to generate the LiFi transmission information based on the information to be transmitted, and to control the third transceiver to mix the LiFi transmission information to a fifth frequency and transmit the LiFi transmission information mixed to the fifth frequency via the LiFi front end module.

6. The apparatus of claim 5, wherein, the third transceiver is further configured to:
acquire LiFi reception information at the fifth frequency received by the LiFi front end module, down-convert the LiFi reception information at the fifth frequency to a baseband frequency and transmit the LiFi reception information down-converted to the baseband frequency to the third baseband protocol processor.

7. The apparatus of claim 5, further comprising:
a fourth transceiver, coupled to the LiFi front end module; and
a fourth baseband protocol processor, coupled to the fourth transceiver, configured to generate the LiFi transmission information based on the information to be transmitted, and to control the fourth transceiver to mix the LiFi transmission information to a sixth frequency and transmit the LiFi transmission information mixed to the sixth frequency via the LiFi front end module.

8. The apparatus of claim 7, wherein, the fourth transceiver is further configured to:
acquire LiFi reception information at the sixth frequency received by the LiFi front end module, down-convert the LiFi reception information at the sixth frequency to a baseband frequency and transmit the LiFi reception information down-converted to the baseband frequency to the fourth baseband protocol processor.

9. The apparatus of claim 7, wherein, the second frequency, the fourth frequency, the fifth frequency, and the sixth frequency are 80 MHz, 160 MHz, 280 MHz, and 360 MHz, respectively.

10. The apparatus of claim 3, wherein, the first frequency and the third frequency are 2.4GHz and 5GHz, respectively.

11. A mobile terminal, comprising a data transmission apparatus, wherein the apparatus comprises a radio frequency (RF) front end module, a light fidelity (LiFi) front end module, a first transceiver coupled to the RF front end module and the LiFi front end module respectively and a first baseband protocol processor coupled to the first transceiver, wherein the first baseband protocol processor is configured to generate wireless fidelity (WiFi) transmission information or LiFi transmission information based on information to be transmitted, and to control the first transceiver to mix the WiFi transmission information to a first frequency and transmit the WiFi transmission information mixed to the first frequency via the RF front end module, and to control the first transceiver to mix the LiFi transmission information to a second frequency and transmit the LiFi transmission information mixed to the second frequency via the LiFi front end module.

12. The mobile terminal of claim 11, wherein, the first transceiver is further configured to:
acquire WiFi reception information at the first frequency received by the RF front end module, down-convert the WiFi reception information at the first frequency to a baseband frequency and transmit the WiFi reception information down-converted to the baseband frequency to the first baseband protocol processor; and
acquire LiFi reception information at the second frequency received by the LiFi front end module, down-convert the LiFi reception information at the second frequency to the baseband frequency and transmit the LiFi reception information down-converted to the baseband frequency to the first baseband protocol processor.

13. The mobile terminal of claim 11 or 12, wherein, the apparatus further comprises:
a second transceiver, coupled to the RF front end module and the LiFi front end module, respectively; and
a second baseband protocol processor, coupled to the second transceiver, configured to generate the WiFi transmission information or the LiFi transmission information based on the information to be transmitted, and to control the second transceiver to mix the WiFi transmission information to a third frequency and transmit the WiFi transmission information mixed to the third frequency via the RF front end module, and to control the second transceiver to mix the LiFi transmission information to a fourth frequency and transmit the LiFi transmission information mixed to the fourth frequency via the LiFi front end module.

14. The mobile terminal of claim 13, wherein, the second transceiver is further configured to:
acquire WiFi reception information at the third frequency received by the RF front end module, down-convert the WiFi reception information at the third frequency to a baseband frequency and transmit the WiFi reception information down-converted to the baseband frequency to the second baseband protocol processor; and
acquire LiFi reception information at the fourth frequency received by the LiFi front end module, down-convert the LiFi reception information at the fourth frequency to the baseband frequency and transmit the LiFi reception information down-converted to the baseband frequency to the second baseband protocol processor.

15. The mobile terminal of claim 13, wherein, the apparatus further comprises:
a third transceiver, coupled to the LiFi front end module; and
a third baseband protocol processor, coupled to the third transceiver, configured to generate the LiFi transmission information based on the information to be transmitted, and to control the third transceiver to mix the LiFi transmission information to a fifth frequency and transmit the LiFi transmission information mixed to the fifth frequency via the LiFi front end module.

16. The mobile terminal of claim 15, wherein, the third transceiver is further configured to:
acquire LiFi reception information at the fifth frequency received by the LiFi front end module, down-convert the LiFi reception information at the fifth frequency to a baseband frequency and transmit the LiFi reception information down-converted to the baseband frequency to the third baseband protocol processor.

17. The mobile terminal of claim 15, wherein, the apparatus further comprises:
a fourth transceiver, coupled to the LiFi front end module; and
a fourth baseband protocol processor, coupled to the fourth transceiver, configured to generate the LiFi transmission information based on the information to be transmitted, and to control the fourth transceiver to mix the LiFi transmission information to a sixth frequency and transmit the LiFi transmission information mixed to the sixth frequency via the LiFi front end module.

18. The mobile terminal of claim 17, wherein, the fourth transceiver is further configured to:
acquire LiFi reception information at the sixth frequency received by the LiFi front end module, down-convert the LiFi reception information at the sixth frequency to a baseband frequency and transmit the LiFi reception information down-converted to the baseband frequency to the fourth baseband protocol processor.

19. The mobile terminal of claim 17, wherein, the second frequency, the fourth frequency, the fifth frequency, and the sixth frequency are 80 MHz, 160 MHz, 280 MHz, and 360 MHz, respectively.

20. The mobile terminal of claim 13, wherein, the first frequency and the third frequency are 2.4GHz and 5GHz, respectively.
